# EUROPÄISCHE PATENTSCHRIFT

(11) **EP 1 962 989 B1**
(45) Veröffentlichungstag und Bekanntmachung des Hinweises auf die Patenterteilung: **19.03.2014**
(21) Anmeldenummer: 06806722.2
(22) Anmeldetag: 21.11.2006
(51) Int. Cl.: B01D 29/11

(54) **VERFAHREN ZUM HERSTELLEN EINES STÜTZTEILS SOWIE FILTERELEMENT**
METHOD FOR PRODUCING A SUPPORT PART AND FILTER ELEMENT
PROCEDE POUR PRODUIRE UNE PIECE DE SUPPORT ET ELEMENT FILTRANT

(30) Priorität: 19.12.2005 DE 102005060612
(43) Veröffentlichungstag der Anmeldung: 03.09.2008
(73) Patentinhaber: HYDAC FILTERTECHNIK GMBH, 66280 Sulzbach (DE)
(72) Erfinder: SAKRASCHINSKY, Michael, 66386 St. Ingbert (DE); MÜLLER, Günther, 88682 Salem (DE)
(74) Vertreter: Bartels, Martin Erich Arthur
(86) Internationale Anmeldenummer: PCT/EP2006/011137
(87) Internationale Veröffentlichungsnummer: WO 2007/073806

(56) Entgegenhaltungen:
- US-A1- 6 006 565
- US-A1- 6 014 988

## Beschreibung

Die Erfindung betrifft ein Verfahren zum Herstellen eines Stützteils, insbesondere für den Einsatz bei einem Filterelement, das mit Fluiddurchlässen versehen zu einem Stützrohr geformt wird, das umfangsseitig eine Anlagefläche für ein Filtermaterial ausbildet, in die ringförmig mindestens eine Sicke eingebracht wird, die die Anlagefläche in Teilanlageflächen unterteilt. Die Erfindung betrifft des weiteren ein nach einem dahingehenden Verfahren hergestelltes Filterelement mit Stützteil.

Durch die DE 102 56 743 A1 ist ein Filterelement für Fluide bekannt mit einem von Filtermaterial umgebenen, Fluiddurchlässe aufweisenden Hohlkörper als Stützrohr, der einen inneren Filterhohlraum für gefiltertes Fluid definiert und als Träger für einen Wickel des auf ihm mit einer Mehrzahl von Windungen aufgewickelten Filtermaterials in Form eines Filterbandes dient. Bei der bekannten Lösung ist ein zumindest zweiteilig ausgebildeter Wickel vorgesehen, dessen innerer Teil durch ein erstes, mit seinem Bandanfang am Hohlkörper anliegendes und diesen mit einer Mehrzahl von Windungen umgebendes Filterband gebildet ist und dessen äußerer zweiter Teil durch ein mit seinem Bandanfang lösbar mit dem Bandende des ersten Filterbandes verbundenes zweites Filterband gebildet ist, das das erste Filterband mit einer Mehrzahl von Windungen umgibt. Die bekannte Lösung erlaubt ein verbessertes Filter-Betriebsverhalten, insbesondere lassen sich verschmutzungsbedingte Abwickelvorgänge durch den Differenzdruck steuern.

Neben dem aufgezeigten Filterwickel als Filtermaterial ist durch die nachveröffentlichte DE 10 2004 061 078 ein Filtermaterial für ein Filterelement bekannt mit mindestens einer ersten Strukturlage mit einer vorgebbaren Flächenausdehnung und vorgebbaren Filtereigenschaften, wie der Filterfeinheit, wobei auf einer der Oberseiten der ersten Strukturlage oder zwischen diesen mindestens eine weitere vorgebbare Filtereigenschaften aufweisende Strukturlage vorhanden ist, deren vorgebbare Flächenausdehnung verschieden ist von der Flächenausdehnung der ersten Strukturlage. Die genannten Strukturlagen als Filtermaterial sind aus Streifen unterschiedlicher Länge ausgebildet und sind insbesondere plissiert, vorzugsweise mit der gleichen Art und Anzahl an Falten. Vergleichbar der vorstehend genannten Lösung ist über die unterschiedlichen plissierten Strukturlagen eine Art Vorfilter und Hauptfilter für das Filterelement konzipierbar, wobei der Hauptfilter von der Fluiddurchlässigkeit her gesehen derart konzipiert sein kann, dass er hohe Fluidmengen durchläßt bei akzeptabler Schmutzaufnahmekapazität, die dann durch eine höhere Filterfeinheit des vorfilters verbesserbar ist. Auch bei dieser bekannten Lösung erstrecken sich die plissierten Strukturlagen um den Außenumfang eines Stützrohres als Stützteil des Filterelementes herum.

Allen vorstehend genannten bekannten Lösungen ist gemeinsam, dass sich das jeweils eingesetzte Filtermaterial an einem Stützteil in Form eines Stützrohres mit Fluiddurchlässen, eingebracht in der Art einer Perforation, abstützt, wobei je nach Ausgestaltung des Fitterelementes Stützrohre für unterschiedliche Beanspruchungen in unterschiedlichen Materialien, Wandstärken, Lochungen sowie Teilungen und Oberflächenschutzarten hergestellt werden. Da der Durchmesser der Lochung (Perforation), die die Fluiddurchlässe bildet, abhängig von der Wanddicke des Rohres ist, werden für hohe Beanspruchungen größere Wanddicken und damit auch eine entsprechend große Lochung, also Fluiddurchlässe mit großen Durchtrittsquerschnitten benötigt.

Beim Filtern durchströmt das verschmutzte Fluid zunächst das eingesetzte Filtermaterial des Filterelementes, wobei Verschmutzungen zurückbehalten werden, und das abgereinigte Fluid durchströmt die Fluiddurchlässe des Stützrohres und wird auf der Innenseite des Stützrohres aus der Filtervorrichtung abgeführt, in die das jeweilige Filterelement (Stützrohr mit Filtermaterial) austauschbar eingesetzt ist. Beim dahingehenden Filterbetrieb entsteht mithin ein Differenzdruck zwischen Außenseite des Filterelementes und Innenseite des Stützrohres mit der Folge, dass sich Teile des Filtermaterials oder der Filtermatte (Filterwickel) in die Fluiddurchlässe drücken und dadurch beschädigt werden können. Zwar kann dieser das Filtermaterial schädigende Einfluß dadurch verhindert werden, dass ein zusätzlicher Siebzylinder, z.B. aus Drahtgewebe, über den Außendurchmesser des Stützrohres gezogen wird oder das Filtermaterial selbst in Drahtzwischengewebelagen aufgenommen ist; allein ist es dann immer noch notwendig, das Stützrohr mit sehr großen Wandstärken zu versehen, um bei entsprechend hohen Differenzdrücken zu verhindern, dass es zum Einbeulen des Stützrohres kommt, das im Extremfall zum Einreißen von Wandteilen und mithin zum Versagen des Filterelementes führt.

Um für dahingehend hohe Anforderungen nun dennoch die Wandstärke des Stützrohres und damit auch den Durchmesser der Fluiddurchlässen reduzieren zu können, um zu hohen Steifigkeits- und Festigkeitswerten zu gelangen, ist in der Praxis bereits vorgeschlagen worden, im Inneren der Stützrohre sog. Stützringe einzubringen und zu befestigen. Dies ist zum einen bei der Montage sehr aufwendig und hat außerdem den Nachteil, dass es beim Einpressen der Stützringe zu einer Gratbildung auf der Innenseite des Stützrohres kommen kann, da der Ring sich über den nach innen stehenden Stanzgrat zu bewegen hat. Ein weiterer Nachteil ergibt sich, sofern das Stützrohr nachträglich mit einem Oberflächenschutz, beispielsweise in Form einer korrosionshemmenden Beschichtung od. dgl., zu versehen ist. In diesem Fall müssen beide Teile, Stützrohr und Stützringe, separat beschichtet und anschließend montiert werden, was wiederum zeitaufwendig und kostenintensiv ist, oder die Stützringe müssen zuerst montiert und anschließend der Verbund beschichtet werden, was dazu führt, dass sich in den Spalten zwischen Stützrohr und zuordenbarem Stützring, der teilweise auch beizenartige Oberflächenschutz sammelt, dann nach unten hin ausläuft und erst recht zur Korrosionsbildung führt. Um diesen Nachteilen zu begegnen, ist wiederum in der Praxis vorgeschlagen worden, die Wandstärke des Stützrohres zu reduzieren, ohne zusätzliche Ringe einzupressen, indem umlaufende Sicken in das Stützrohr eingeprägt werden. Die dahingehenden Versteifungssicken führen zu einer Festigkeitserhöhung und steifen den Stürzrohrverbund aus; allein kommt es dahingehend durch die Kerbwirkung der V-förmig ausgebildeten und derart verbleibenden Sicke zu einer Schwächung des Stützrohrmaterials mit der Folge des möglichen Versagens durch Rißbildung.

Ausgehend von diesem Stand der Technik liegt der Erfindung die Aufgabe zugrunde, die bekannten Verfahren zum Herstellen eines Stützteils sowie die danach hergestellten Filterelemente dahingehend weiter zu verbessern, dass die Herstellungs- und Montagekosten gesenkt sind und eine höhere Stand- und Funktionssicherheit erreicht ist. Eine dahingehende Aufgabe löst ein Verfahren mit den Merkmalen des Patentanspruches 1 in seiner Gesamtheit sowie ein Filterelement mit den Merkmalen des Patentanspruches 9.

Dadurch, dass erfindungsgemäß unter Verringerung des freien Sickenquerschnittes und unter Bildung eines Stützringes die einander benachbart gegenüberliegenden Sickenflanken der jeweils zuordenbaren Sicken aufeinandergelegt werden, ist die schädigende Kerbwirkung für V-förmige Sicken im Grund des Stützrohres vermieden, da durch Verringerung des möglichen Keilquerschnittes es zu einer Verrundung im Sickengrund kommt. Ferner können sich die benachbarten Sickenflanken sowohl in axialer Richtung des Stützteils in Form des Stützrohres als auch in radialer Richtung gegenseitig abstützen, was zu einer Aussteifung des Gesamtverbundes mit den jeweiligen Teilanlageflächen des Stützrohres führt..

Ferner ist durch den derart gebildeten Stützring der Neigung des Stützrohres einzubeulen wirksam entgegengewirkt und aufgrund der möglichen großen Übergänge sind schädigende Einflüsse auf das Stützrohrmaterial vermieden. Es hat sich gezeigt, dass mit der erfindungsgemäßen Lösung ein hochbeulsteifer Verband realisierbar ist, der sich darüber hinaus kostengünstig herstellen und in Form des kompletten Filterelementes sinnfällig zusammensetzen läßt. Insbesondere führen die derart eingebrachten Stützringe nicht zu einer Gratbildung beim sonstigen Stützrohrmaterial, was die schädigende Kerbwirkung ansonsten noch begünstigen könnte. Ferner hat es sich gezeigt, dass aufgrund der geschlossenen Stützringstruktur das Beschichten des Stützrohres keine Probleme bereitet, da insbesondere nun die Stützringe integraler Bestandteil des sonstigen rohrförmigen Stützteils mit seinen jeweiligen Teilanlageflächen ist. Ferner ist insoweit der vorhandenen Korrosionsgefahr wirksam begegnet, sofern für das Stützteil Blechmaterialien eingesetzt sein -sollten.

Weitere vorteilhafte Ausführungsformen der erfindungsgemäßen Lösung sind Gegenstand der sonstigen Unteransprüche.

Im folgenden wird das erfindungsgemäße Verfahren anhand eines Ausführungsbeispiels nach der Zeichnung näher erläutert. Dabei zeigen in prinzipieller und nicht maßstäblicher Darstellung die
- Fig.1: einen Teilausschnitt auf ein rohrförmiges Stützteil in einem Vorverfahrensschritt,
- Fig.2: eine der Fig.1 entsprechende Darstellung nach Durchführung des erfindungsgemäßen Verfahrens.

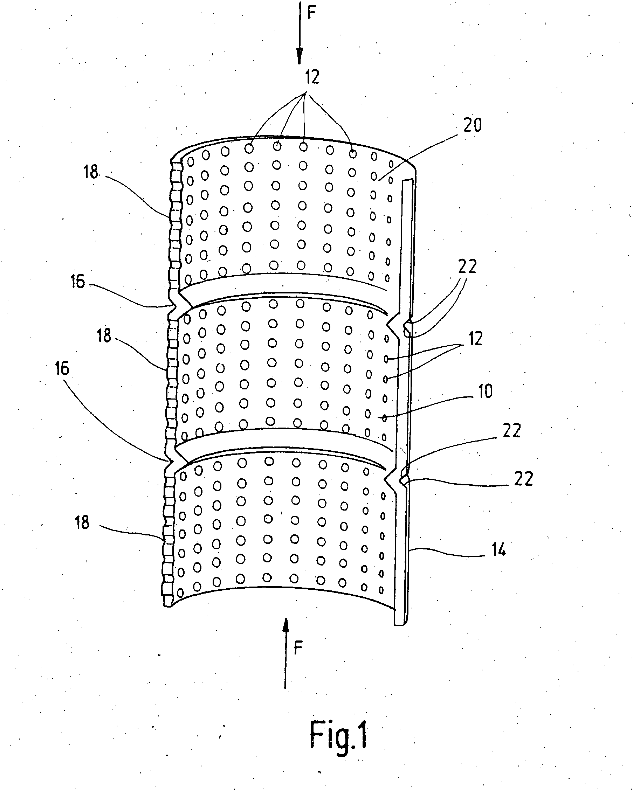

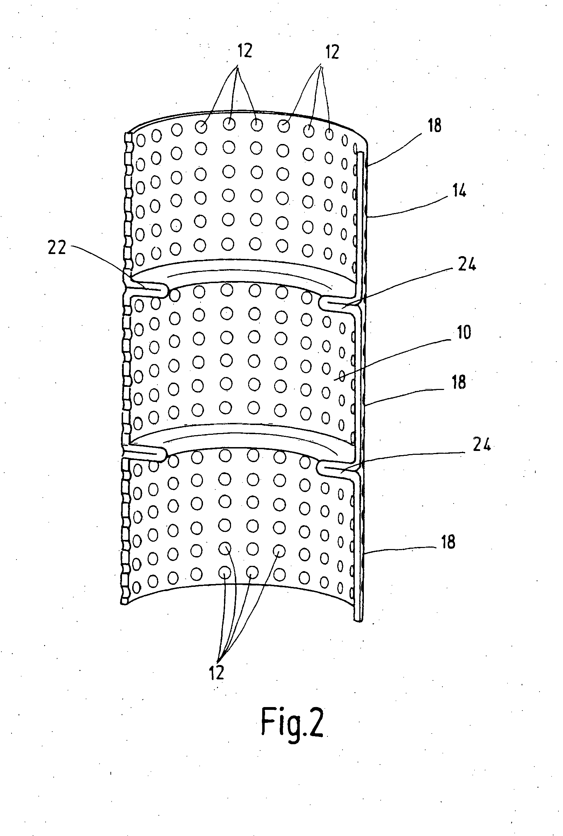

Das zu beschreibende erfindungsgemäße Verfahren dient dem Herstellen eines Stützteils, insbesondere für den Einsatz bei einem hydraulischen Filterelement, das in einer Vielzahl von Ausführungsformen auf dem Markt frei erhältlich ist. Beispielhaft sei hier auf den Offenbarungsgehalt der DE 10 2004 005 202 verwiesen sowie auf die DE 102 56 743. Ein weiteres Filterelement mit elektrisch leitenden Kontaktierungsteilen ist in der DE 10 2004 061 078 exemplarisch aufgezeigt. Insoweit wird im folgenden die erfindungsgemäße Lehre nur anhand des in den Fig.1 und 2 aufgezeigten Stützteils näher erläutert. Dieses weist ein zylindrisches Stützrohr 10 auf, das mit in Spalten und Zeilen angeordneten Fluiddurchlässen 12 versehen ist, die insoweit das Stützrohr 10 fluidführend durchgreifen. Die dahingehenden Fluiddurchlässe 12 sind in der Art einer Perforation in das Stützrohr 10 eingebracht, das neben einer zylindrischen Querschnittsfläche auch anders geformt sein kann und beispielhaft auch in der Art einer ovalen Ausführung zu erhalten ist.

Das Stützrohr 10 weist.außenumfangsseitig eine Anlagefläche 14 auf für ein nicht näher dargestelltes passierten Filtermaterial oder einen zylindrischen Filterwickel. In die dahingehende Anlagefläche 14 sind außenumfangsseitig ringförmig verlaufende Sicken 16 eingebracht, die die Anlagefläche 14 in drei Teilanlageflächen 18 mit im wesentlichen gleicher Einbauhöhe unterteilt. Der in Fig.1 gezeigte freie Sickenquerschnitt ist V- oder Keilförmig ausgebildet, wobei sich der Keil auf die Innenseite 20 des Stützrohres erstreckt und die beiden benachbarten freien Sickenflanken 22 münden im wesentlichen bündig auf der Oberseite der Anlagefläche 14 und mithin am Außenumfang des Stützteils aus.

Erfolgt nun in Längsrichtung des Stützrohres 10 eine gegenüberliegende Krafteinleitung F auf die Enden des Stützrohres 10, verringert sich der in Fig.1 gezeigte freie Sickenquerschnitt unter Bildung eines jeweiligen Stützringes 24 (vgl. Fig.2), der sich insoweit wulstartig an der Innenseite des Stützrohres 10 erstreckt, das dort mit seinem freien Innenquerschnitt dem Abtransport von filtriertem Fluid aus dem zuordenbaren Filterelement dient. Anstelle der gegenüberliegenden Krafteinleitung F besteht auch die Möglichkeit; eine Endseite des Stützrohres 10 einzuspannen oder gegen eine nicht näher dargestellte Ablagefläche abzustützen, um dann nur von der gegenüberliegenden Seite her die Krafteinleitung mittels einer geeigneten Vorrichtung (Presse) zu veranlassen. Der Umformvorgang wird jedenfalls so lange betrieben, bis die benachbarten Sickenflanken 22 gemäß der Darstellung nach der Fig.2 in Anlage miteinander kommen, die insoweit gratfrei herstellbar sind.

Ferner ist der jeweilige.Stützring 24 einstückiger Bestandteil der sonstigen Anlagefläche 14 des Stützrohres 10. In Abhängigkeit der Bauhöhe des jeweiligen Stützrohres 10 sind die gezeigten.Stützringe 24 in Übereinanderanordnung mehrfach einzubringen, wobei bei sehr klein aufbauenden Elementen ein Stützrohr 10 auch nur mit einer Sicke 16 einzusetzen ist. Ferner können bei hochbeanspruchten Stellen im Stützrohr 10 auch mehrere Sikken 16 in Dichtaufeinanderfolge in der Anlagefläche 14 eingebracht sein. Weniger beanspruchte Bereiche können auch von dahingehenden Versteifungsringen, wie aufgezeigt, freigelassen werden. Gemäß den Darstellungen nach den Figuren ist die jeweilige Sicke 16 nebst Stützring 24 durchgehend umlaufend im Stützrohr 10 angebracht; hier wäre es aber auch denkbar, nur segment- oder absatzweise die Anordnung zu treffen, beispielsweise indem ein Teilring als Stützring 24 sich längs einer Einbauhöhe an der Anlagefläche 14 erstreckt und versetzt dazu angeordnet in einer anderen Ebene ein weiterer Teilring (nicht dargestellt). Da sich durch die Krafteinleitung F die Bauhöhe des Stützrohres 10 ändert, ist dem bei der Bemessung der Einbaulänge entsprechend Rechnung zu tragen, d.h. man muß bei einer gewünschten Einbaulänge des Stützrohres 10 dieses um ein gewisses Überstandsmaß länger wählen, um nach der Umformung ein paßgenaues Stützrohr 10 zur Verfügung zu haben, wobei grundsätzlich auch die Möglichkeit besteht, überstehende Enden des Stützrohres 10 zu kürzen, um das gewünschte Längenmaß zu erhalten.

Vorzugsweise besteht das Stützrohr 10 zunächst aus einem ebenen Blechzuschnitt oder einer Blechplatine, die gelocht mit den entsprechenden Fluiddurchlässen 12 in der Art einer Perforation versehen ist. Das Blechteil-Stützrohr 10 wird dann zum Rohr umgeformt und die freien Enden werden beispielsweise mittels eines Schweiß- oder Klebevorganges fest miteinander verbunden. Grundsätzlich würde aber auch die Möglichkeit bestehen, das Stützrohr 10 vorzugsweise aus Kunststoffmaterial ausgebildet in Form eines Extrusionsvorganges zu erhalten, wobei man dann noch innerhalb des Erweichungszustandes des Kunststoffmaterials die Umformung zu den versteifenden Stützringen 24 vorzunehmen hat. Die aufgezeigten Fluiddurchlässe 12 können dann noch nachträglich eingebracht werden, sei es durch mechanische Bearbeitung oder über ein Laserabtragverfahren od. dgl.. Demgemäß können für die aufgezeigten Fluiddurchlässe 12 auch andere Querschnittsformen zum Einsatz kommen, wobei im Hinblick auf die mögliche Stützwirkung und den Grad an gewünschter Fluiddurchlässigkeit sich die aufgezeigte Lochung als besonders günstig erwiesen hat.

Die Sicken 16 können mittels eines nicht näher dargestellten Werkzeuges einrolliert, eingedrückt oder eingeprägt werden. Ferner ist, wie aufgezeigt (Fig.1), der Sickenquerschnitt zunächst V- oder keilförmig und nach Aufeinanderlegen der Sickenflanken 22 kommt es zu einer U-förmigen Ausbildung (Fig.2), was die Kerbwirkung deutlich reduziert und mit entsprechend hohen Standzeiten einhergeht. Ferner ist es möglich, die angesprochenen Fluiddurchlässe 12, wie aufgezeigt, oder gegebenenfalls mit anderen Querschnittsformen auch in den Stützring 24 einzubringen, um dergestalt die Fluiddurchlässigkeit zu erhöhen.

Da bei Sonderkonstruktionen Stützrohre 10 das Filtermaterial sowohl innenumfangsseitig als auch außenumfangsseitig umfassen können, ist jedenfalls Sorge dafür zu tragen, dass die jeweils vorstehende Sicke 16 oder Stützring 24 mit ihrem freien Ende in einer Richtung vorstehen, die nicht vom Filtermaterial selbst abgedeckt ist. Bei einem entsprechend nachgiebigen Filtermaterial kann aber auch das dahingehend freie Ende in das Material eingreifen, was zur Erhöhung des Längshaltes am Stützrohr 10 dient und ferner wäre es auch denkbar, in die Abstände zwischen zwei einander benachbarten Stützringe 24 ein jeweils spezifisches Filtermaterial einzusetzen, um dergestalt segmentweise innerhalb der Länge des Stützrohres 10 unterschiedliche Filtereigenschaften darzustellen. Wie die Darstellung nach der Fig.2 verdeutlicht, würde eine Beschichtung des dort aufgezeigten Stützrohrverbundes keine Probleme bereiten und insbesondere wäre ein gleichmäßiger tropffreierAuftrag des jeweiligen Beschichtungsmaterials gewährleistet.

Bei einer anderen nicht näher dargestellten Ausführungsform ist es auch möglich einen freien Sickenquerschnitt in V-Form in der Art einer Helix- oder sonstigen Wendel-entlang des Stützrohres 10 zu führen. Durch anschließendes Tordieren des Stützrohres 10 entgegen der Wendelrichtung werden dann die V-förmigen Sickenflanken unter Bildung der U-Sicke aufeinandergelegt und derart die Sickengeometrie versteift.

Die erfindungsgemäße Lösung führt zu hochsteifen Stützrohren, die beulsteif mit sehr geringen Wandstärken versehbar sind, um dergestalt Materialkosten und Gewicht einzusparen.

## Patentansprüche

1. Verfahren zum Herstellen eines Stützteils, insbesondere für den Einsatz bei einem Filterelement, das mit Fluiddurchlässen (12) versehen zu einem Stützrohr (10) geformt wird, das umfangsseitig eine Anlagefläche (14) für ein Filtermaterial ausbildet, in die ringförmig mindestens eine Sicke (16) eingebracht wird, die die Anlagefläche (14) in Teilanlageflächen (18) unterteilt, **dadurch gekennzeichnet, dass** unter Verringerung des freien Sickenquerschnitts und unter Bildung eines Stützringes (24) die einander benachbart gegenüberliegenden Sickenflanken (22) der jeweils zuordenbaren Sicke (16) aufeinandergelegt werden.

2. Verfahren nach Anspruch 1, **dadurch gekennzeichnet, dass** das Aufeinanderlegen der genannten Sickenflanken (22) mittels einer axialen Krafteinleitung (F) auf die freien Enden des Stützrohres (10) vorgenommen wird, die insoweit ihren axialen Abstand zueinander verringern.

3. Verfahren nach Anspruch 1 oder 2, **dadurch gekennzeichnet, dass** das Stützrohr (10) aus einem ebenen, mit den Fluiddurchlässen (12) versehen Blech- oder Platinenteil umgeformt oder durch Extrusion eines Kunststoffmaterials erhalten wird.

4. Verfahren nach einem der Ansprüche 1 bis 3, **dadurch gekennzeichnet, dass** die Sicken (16) einrolliert, eingedrückt oder eingeprägt werden.

5. Verfahren nach einem der Ansprüche 1 bis 4, **dadurch gekennzeichnet, dass** der freie Sickenquerschnitt V-förmig und nach Aufeinanderlegen der Sickenflanken (22) U-förmig ausgebildet wird.

6. Verfahren nach einem der Ansprüche 1 bis 5, **dadurch gekennzeichnet, dass** die Huiddurchtässe (12) in die Anlagefläche (14) eingebracht werden sowie vorzugsweise in der jeweiligen Sicke (16).

7. Verfahren nach einem der Ansprüche 1 bis 6, **dadurch gekennzeichnet, dass** die jeweilige Sicke (16) außenumfangsseitig derart entlang der Anlagerfläche (14) angebracht wird, dass der Sickengrund nach innen weist.

8. Verfahren nach einem der Ansprüche 1 bis 7, **dadurch gekennzeichnet, dass** das Stützteil einschließlich des jeweiligen Stürzringes (24), hervorgegangen aus dem freien Sickenquerschnitt einer Sicke (16), mit einer Beschichtung versehen wird.

9. Filterelement mit einem Stützteil, hergestellt mittels eines Verfahrens nach einem der Patentansprüche 1 bis 8, das mit Fluiddurchlässen (12) versehen ein Stützrohr (10) ausbildet, das umfangsseitig eine Anlagefläche (14) für ein Filtermaterial aufweist, in die ringförmig mindestens ein Sicke (16) eingebracht ist, die die Anlagefläche (14) in Teilanlageflächen (18) unterteilt, **dadurch gekennzeichnet, dass** der freie Sickenquerschnitt reduziert einen Stützring (24) ausbildet, bei dem die einander benachbarten Sickenflanken (22) aufeinander liegen.

## Claims

1. A method for producing a support part, in particular for use with a filter element, which, provided with fluid passages (12), is shaped into a support tube (10) which on the peripheral side forms a contact surface (14) for a filter material, into which at least one bead (16) which divides the contact surface (14) into partial contact surfaces (18) is annularly placed, **characterised in that** while reducing the free bead cross-section and with the formation of a support ring (24) the bead flanks (22) of the respectively assignable bead (16), which flanks are adjacent opposite one another, are placed on top of one another.

2. The method according to Claim 1, **characterised in that** the aforementioned bead flanks (22) are placed on top of one another by means of axial application of force (F) to the free ends of the support tube (10) which in this respect reduce their axial distance from one another.

3. The method according to Claim 1 or 2, **characterised in that** the support tube (10) is shaped from a flat sheet metal or blank part which is provided with the fluid passages (12) or is obtained by extrusion of a plastic material.

4. The method according to any of Claims 1 to 3, **characterised in that** the beads (16) are rolled in, crimped or impressed.

5. The method according to any of Claims 1 to 4, **characterised in that** the free bead cross-section is V-shaped and, after placing the bead flanks (22) on top of one another, is U-shaped.

6. The method according to any of Claims 1 to 5, **characterised in that** the fluid passages (12) are made in the contact surface (14) and preferably in the respective bead (16).

7. The method according to any of Claims 1 to 6, **characterised in that** the respective bead (16) is placed on the outer peripheral side along the contact surface (14) such that the bead base points to the inside.

8. The method according to any of Claims 1 to 7, **characterised in that** the support part including the respective support ring (24), having emerged from the free cross section of a bead (16), is provided with a coating.

9. A filter element with a support part, produced by means of a method according to any of Claims 1 to 8, which, provided with fluid passages (12), forms a support tube (10) which on the peripheral side has a contact surface (14) for a filter material into which at least one bead (16) is annularly formed which divides the contact surface (14) into partial contact surfaces (18), **characterised in that** the free bead cross section when reduced forms a support ring (24) in which the bead flanks (22) which are adjacent to one another lie on top of one another.

## Revendications

1. Procédé de fabrication d'une partie d'appui à utiliser, notamment, pour un élément filtrant, partie qui, en étant pourvue de traversées (12) pour du fluide, est conformée en un tube (10) d'appui qui forme du côté du pourtour une surface (14) d'application d'un matériau filtrant, dans laquelle est ménagée annulairement au moins une moulure (16) qui subdivise la surface (14) d'application en des surfaces (18) partielles d'application, **caractérisé en ce qu'**en diminuant la section transversale libre de la moulure et en formant un anneau (24) d'appui, on met l'un sur l'autre les flancs (22) opposés et voisins l'un de l'autre des moulures (16) pouvant être associées respectivement.

2. Procédé suivant la revendication 1, **caractérisé en ce que** la mise l'un sur l'autre des flancs (22) de moulure mentionnés est effectuée au moyen d'une application (F) d'une force axiale sur les extrémités libres du tube (10) d'appui dont, dans cette mesure, la distance axiale entre elles diminue.

3. Procédé suivant la revendication 1 ou 2, **caractérisé en ce que** le tube (10) d'appui est obtenu à partir d'une partie de tôle ou de platine plane pourvue de traversées (12) pour du fluide, transformée ou par extrusion d'une matière plastique.

4. Procédé suivant l'une des revendications 1 à 3, **caractérisé en ce que** les moulures (16) sont roulées, formées par impression ou formées par empreintes.

5. Procédé suivant l'une des revendications 1 à 4, **caractérisé en ce que** la section transversale libre d'une moulure est en forme de V et après mise l'un sur l'autre des flancs (22) de la moulure est en forme de U.

6. Procédé suivant l'une des revendications 1 à 5, **caractérisé en ce que** les traversées (12) pour du fluide sont ménagées dans la surface (14) d'application ainsi que de préférence dans la moulure (16) respective.

7. Procédé suivant l'une des revendications 1 à 6, **caractérisé en ce que** la moulure (16) respective est mise du côté du pourtour extérieur le long de la surface (14) d'application de manière à ce que le fond de la moulure soit tourné vers l'intérieur.

8. Procédé suivant l'une des revendications 1 à 7, **caractérisé en ce que** la partie d'appui, y compris l'anneau (24) d'appui respectif sortant de la section transversale libre d'une moulure (16), est munie d'un revêtement.

9. Elément filtrant ayant une partie d'appui fabriquée au moyen d'un procédé selon l'une des revendications 1 à 8, qui est formé d'un tube (10) d'appui pourvu de traversées (12) pour du fluide et ayant du côté du pourtour une surface (14) d'application d'un matériau filtrant dans laquelle est ménagée annulairement au moins une moulure (16) qui subdivise la surface (14) d'application en des surfaces (18) partielles d'application, **caractérisé en ce que** la section transversale libre de la moulure réduite forme un anneau (24) d'appui dans lequel les flancs (22) de la moulure voisin l'un de l'autre sont l'un sur l'autre.
